# EUROPEAN PATENT APPLICATION

(11) **EP 2 514 777 A1**
(43) Date of publication of application: **24.10.2012**
(21) Application number: 11003334.7
(22) Date of filing: 20.04.2011
(51) Int. Cl.: C08F 290/10

(54) **Polysaccharide macromonomer based co-polymer**

(71) Applicant: BASF SE, 67056 Ludwigshafen (DE)
(72) Inventor: Laine, Aki, 4125 Riehen (CH); Karppi, Asko, FI-20540 Turku (FI); Kimpimäki, Tomi, FI-37770 Trattila (FI); Rinne, Jaana, FI-21270 Nousiainen (FI)
(74) Representative: TER MEER - STEINMEISTER & PARTNER GbR

(57) **Abstract**

The invention relates to aqueous co-polymers, which are based on ethylenically unsaturated polysaccharide derivatives co-polymerized with α,β-ethylenically unsaturated carboxylic acids and hydrophobic monomers. Ethylenically unsaturated polysaccharides of the invention are preferably starch derivatives comprising covalently bound co-polymerizable groups. The co-polymers are at least partially water insoluble at acidic conditions and thereby have relatively low viscosities. In alkaline or neutral conditions the co-polymers dissolve activating the thickening effect. The carbohydrate based co-polymers of the invention are applicable as thickeners and rheology modifiers in various applications such as paper coatings.

## Description

### Summary of the invention

The present invenion relates to aqueous co-polymers, which are based on ethylenically unsaturated polysaccharide derivatives co-polymerized with α,β-ethylenically unsaturated carboxylic acids and hydrophobic monomers. Ethylenically unsaturated polysaccharides of the invention are preferably starch derivatives comprising covalently bound co-polymerizable groups. These so-called carbohydrate based co-polymers are at least partially water insoluble at acidic conditions and thereby have relatively low viscosities. In alkaline or neutral conditions the co-polymers dissolve activating the thickening effect. The carbohydrate based co-polymers of the invention are applicable as thickeners and rheology modifiers in various applications such as paper coatings.

The present invention relates to carbohydrate macromonomer containing co-polymers, which can be used for the modification of the rheological properties and structure of various liquid and flowing mixtures. Especially, the invented co-polymers are applicable for improving the rheology and water retention of paper coating colours, but the products are as well applicable for the adjustment of rheological properties of various paints, home and personal care formulations and polymer flooding of enhanced oil recovery.

### Background of the invention

Carboxy methyl cellulose (CMC) is a commonly used carbohydrate based rheology modifier in paper coating applications. CMC as a carbohydrate also boosts the efficiency of fluorescent whitening agents in the coating formulations. Disadvantages of CMC are the moderate thickening characteristics, high price and the requirements for the separate dissolution equipment. There are also fully synthetic rheology modifiers on the market. The most common synthetic rheology modifiers are alkali soluble emulsions based on acrylic monomers. These acidic emulsions can be delivered as concentrated low viscosity products, which dissolve and give highly efficient thickening at neutral or alkaline conditions of the final applications. The fully synthetic rheology modifiers lack the fluorescent whitening agent boosting capability of carbohydrate based thickeners.

Alkali soluble emulsion type of rheology modifiers based on α,β-ethylenically unsaturated carboxylic acid and hydrophobic monomers are well known and have been described for example in US 4,423,118 and US 5,326,843. Associatively thickening hydrophobically modified alkali soluble co-polymers are described in WO2004076743. US 5,478,602 describes alkali swellable thickeners, which contain non-carbohydrate macromonomers co-polymerized with other monomers.

Starch graft co-polymers prepared by oxidative radical initiation of starch are also known and described in patents publications WO 93/11300, EP0705285, US 4,301,017 and US 6,753,377. These oxidative grafting processes are difficult to control, starch backbones are highly degraded, the grafting efficiencies are low and starch mainly acts just as a protective colloid for the dispersions of synthetic co-polymers. Thereby, the oxidative grafting methods are inapplicable for the preparation of efficient high molecular weight rheology modifiers, which contain remarkable proportions of co-polymerized carbohydrates.

Much more controlled co-polymerization of carbohydrates with common monomers can be achieved by introducing covalently bound ethylenically unsaturated groups on the carbohydrate backbone. US 2,668,156 and US 4,060,506 describe numerous unsaturated co-polymerizable starch derivatives. Co-polymerizable starch esters of acrylic acid and co-polymers of acryloyl starch, styrene and methyl methacrylate and have been published in Journal of Applied Polymer Science, Vol. 96, 452-459 (2005) and Journal of Polymer Science Part A: General Papers, Vol. 3, 1031-1036 (2003).

In view thereof, the object underlying the present invention is the provision of improved co-polymers, which can be used for the modification of the rheological properties and structure of various liquid and flowing mixtures.

### Detailed description of the invention

The present invention relates to an aqueous polymer dispersion or solution, comprising a co-polymer obtainable by co-polymerizing
(a) one or more ethylenically unsaturated polysaccharide derivatives;
(b) one or more α,β-ethylenically unsaturated carboxylic acids; and
(c) one or more hydrophobic monomers.

In other words, the present invention relates to the use of co-polymerizable carbohydrate chains (i.e. ethylenically unsaturated polysaccharide derivatives (a); also referred to as "polysaccharide macromonomers" hereinafter) as building blocks of alkali soluble co-polymers such as emulsion type rheology modifiers. The obtained co-polymers are at least partially water insoluble in acidic conditions (pH 0-6), which gives relatively low viscosities for concentrated products. However, they readily dissolve in neutral or alkaline conditions (pH 7-14) activating the thickening effect to provide enhanced viscosities suitable in applications like paper coating.

Ethylenically unsaturated polysaccharides (compounds (a)) of the invention are preferably starch derivatives comprising covalently bound co-polymerizable groups, but they can be based on any other modified or unmodified carbohydrates such as cellulose, chitosan, guar gum, xanthan, pullulan, dextrins and mixtures thereof.

Preferably the ethylenically unsaturated polysaccharide derivative (a) is an α,β-ethylenically unsaturated polysaccharide derivative, preferably a starch ester selected from the group consisting of acrylate, methacrylate, itaconate, crotonate, fumarate, aconitate or maleate esters of starch. Also preferably the ethylenically unsaturated polysaccharide derivative (a) is a starch ether of allyl chloride, allyl bromide, glycidyl methacrylate, glycidyl acrylate and N-methylol acrylamide.

According to the invention the ethylenically unsaturated polysaccharide derivative (a) preferably has an average of polymerizable groups per polysaccharide chain from 5 to 50, more preferably from 10 to 40. In a further preferred embodiment of the present invention the ethylenically unsaturated polysaccharide derivative (a) has a degree of subsitution from 0.0001 to 0.20 for unsaturated groups, preferably from 0.001 to 0.05 and more preferably from 0.005 to 0.02. The weight average molecular weight of the ethylenically unsaturated polysaccharide derivative (a) preferably ranges from 50 000 to 5 000 000 daltons, more preferably from 100 000 to 1 500 000 dalton and even more preferably from 300 000 to 800 000 daltons.

The ethylenically unsaturated polysaccharide derivative (a) in a particularly preferred embodiment is prepared in situ before the co-polymerization with the other components (b) and (c), preferably by reacting an α,β-ethylenically unsaturated carboxylic acid or an anhydride thereof with a polysaccharide, as mentioned above.

The polysaccharide macromonomers are co-polymerized with standard radical co-polymerization methods with α,β-ethylenically unsaturated carboxylic acids (compounds (b)) and hydrophobic monomers (compounds (c)). Examples of α,β-ethylenically unsaturated carboxylic acids (b) suitable according to the present invention include acrylic acid, methacrylic acid, itaconic acid, maleic acid and crotonic acid, preferably methacrylic acid.

Examples of hydrophobic monomers (c) suitable according to the present invention include methyl (meth)acrylate, ethyl (meth)acrylate, butyl (meth)acrylate, acrylonitrile, butadiene and styrene, preferably ethyl acrylate, methyl acrylate, butyl acrylate, styrene, butadiene, and acrylonitrile. Ethyl acrylate is a particularly preferred hydrophobic monomer. Associative hydrophobic monomers may also be used as hydrophobic comonomers of this invention. Examples of synthetic thickeners with such associative monomers are disclosed in EP0216479, EP0013836 and EP0011806.

The co-polymers may also contain hydrophilic non-carboxylic monomers such as acrylamide, dimethyl acrylamide, N-vinyl formamide, N-vinyl pyrrolidone, 2-hydroxyethyl acrylate and 2-(2-ethoxyethoxy)ethyl acrylate.

The co-polymers may also contain cross-linking monomers such as 1,4-butanediol dimethacrylate (BDDMA), but preferably the number of polymerizable groups on carbohydrate backbones alone is used to control the cross-linking of co-polymers and additional cross-linkers are not needed. Thus, in a preferred embodiment of the invention the co-polymers do not comprise any other cross-linking monomers than the unsaturated polysaccharide derivative (a).

Surfactants can be used in the co-polymerization reaction, but preferably they are not necessary as the polysaccharide macromonomers alone sufficiently stabilize the solutions/dispersions. Thus, the aqueous polymer dispersion or solution according to the invention preferably is stabilized by the co-polymerized polysaccharides themselves and does not comprise any additional surfactants.

The aqueous polymer dispersion or solution according to the present invention preferably comprises a co-polymer with
20-70 weight-%, more preferably 30-60 weight-%, even more preferably 40-50 weight-% of ethylenically unsaturated polysaccharide derivatives;
5-30 weight-%, more preferably 10-25 weight-%, even more preferably 15-20 weight-% of α,β-ethylenically unsaturated carboxylic acids; and
10-50 weight-%, more preferably 20-40 weight-%, even more preferably 25-30 weight-% of hydrophobic monomers.

Further, the aqueous polymer dispersion or solution according to the present invention preferably has a solids content higher than 10%, more preferably between 10 and 25%, and/or a Brookfield viscosity of less than 3000 mPas, more preferably of between 50 and 2500 mPas, at a pH lower than 5. The aqueous polymer dispersion or solution according to the invention can be diluted with water to 1% solids content to give a Brookfield viscosity of less than 50 mPas at a pH lower than 5, and which dissolves at pH 7 to give a Bookfield vicosity higher than 500 mPas, more preferably between 500 and 4000 mPas, even more preferably between 1000 and 3500 mPas, at 1 % solids content.

Thus, the aqueous polymer dispersion or solution according to the invention is at least partially insoluble in water at pH below 5 and dissolves at neutral or alkaline pH to give a viscosity increase providing improved rheology modifying characteristics.

Variable degrees of substitution (DS; determined by ¹H-NMR spectroscopy) may be achieved for the polysaccharide derivatives. The preferred DS range for the derivatives is 0.0001-0.20, most preferably DS 0.001-0.05.

According to the present invention the ethylenically unsaturated polysaccaride derivatives (a), preferably a starch ester selected from the group consisting of acrylate, methacrylate, itaconate, crotonate, fumarate, aconitate or maleate esters of starch, or a starch ether of allyl chloride, allyl bromide, glycidyl methacrylate, glycidyl acrylate and N-methylol acrylamide, are used to provide rheology modifying alkali swellable thickeners, wet-end polymers, surface sizing agents, UV curable compositions, latex like binders for coating colours and water based barrier coatings. In particular the aqueous polymer dispersion or solution according to the present invention is used as a rheology modifying alkali swellable thickener, wet-end polymer, surface sizing agent, UV curable composition, latex like binder for coating colours and water based barrier coatings.

In a further embodiment the invention provides a thickener composition comprising the aqueous polymer dispersion or solution as defined herein for modifying the rheology of paper coatings, paints, and cosmetics. In particular, the invention provides a latex binder comprising the aqueous polymer dispersion or solution as defined herein.

The aqueous polymer dispersion or solution according to the invention can be prepared by conventional processes. Preferably, the process comprises co-polymerizing in an aqueous medium (a) one or more ethylenically unsaturated polysaccharide derivatives; (b) one or more α,β-ethylenically unsaturated carboxylic acids; and (c) one or more hydrophobic monomers, as defined herein, respectively.

Thus, the invention provides significant cost savings in raw materials as the majority of the synthetic monomers can be replaced economically with renewable carbohydrates such as starch. The carbohydrate backbones may also provide advantageous properties for the rheology modifiers as carbohydrates have a better performance as carriers for fluorescent whitening agents and the thickening performance of carbohydrates is typically less affected in high salinity conditions.

The invention will be further described by the following non-binding examples.

### Examples

### Example 1.

Preparation co-polymerizable acryloyl starch with dry esterification process:
111.2 g of acrylic acid was sprayed to 1000 g of native waxy maize starch in a 5L Lödige dry reactor. The mixture was transferred to Vrieco-Nauta type dry reactor and heated at 120°C for 4 hours. The starch ester characterised with 1H NMR had the acryloyl degree of substitution (DS) of 0.006.

### Example 2.

Preparation of acryloyl starch based co-polymer containing 67 weight-% starch:
75 g of the raw mixture of acryloyl starch and acrylic acid from the dry esterification process of Example 1 was dissolved to 600 g of water by cooking. 25 g of ethyl acrylate, 12.5 g of methacrylic acid and 7.5 g of Disponil fes 993 emulgator were introduced to the cooled starch solution. The stirred solution was heated to 80°C and flushed continuously with nitrogen. An initiator solution containing 0.1 g of ammonium persulphate in 20 g of water was slowly added during the period of 1 h. The temperature of the reaction mixture was increased to 85°C for 3 h. The final dispersion had the solids content of 14.3% and the Brookfield viscosity of 7500 mPas (5/20). After dilution to 10% solids content the viscosity was below 1000 mPas. A more diluted dispersion sample with 1% solids had the pH of 3.9 and the viscosity of 20 mPas (4/20) and the neutralization with NaOH to pH 7.0 dissolved the 1% dispersion and increased the viscosity to 3300 mPas (4/20).

### Example 3.

Preparation of starch itaconate with aqueous process:
400 g of oxidized wheat starch (Raisamyl 01151; Mw 650 000) was slurried in 400 ml of water and heated to 30 °C. 27.7 g of itaconic anhydride was added and the pH of the slurry was kept at 8.0-8.5 with 10% NaOH for 4 hours. The reaction was terminated by adjusting the pH to 6.0 with dilute HCl and the product was filtered, washed with water and oven dried at 40°C. The starch ester characterised with 1H NMR had the degree of itaconate substitution of 0.01.

### Example 4.

Preparation of starch itaconate based co-polymers containing 67 weight-% starch:
100 g of the raw mixture of itaconyl starch from the example 3 was dissolved to 420 g of water by cooking. 33.3 g of ethyl acrylate, 16.7 g of methacrylic acid and 10.0 g of Disponil fes 993 emulgator were introduced to the cooled starch solution. The stirred solution was heated to 80°C and flushed continuously with nitrogen. An initiator solution containing 0.2 g of ammonium persulphate in 40 g of water was slowly added during the period of 1 h. The temperature of the reaction mixture was increased to 85°C for 3 h. The final dispersion had the solids content of 19.9% and the Brookfield viscosity of 7400 mPas (4/20).

A diluted dispersion sample with 1% solids had the pH of 5.2 and the viscosity of 14 mPas (4/100) and the neutralization with NaOH to pH 7.0 dissolved the dispersion and increased the viscosity to 44 mPas (4/100). Another sample adjusted to 4% solids had the pH of 5.0 and the viscosity of 26 mPas (4/100) and the neutralization with NaOH to pH 7.0 dissolved the dispersion and increased the viscosity to 352 mPas (4/100).

### Examples 5, 6, 7 and 8.

Preparation of starch methacrylates:
500 g of dry oxidized potato starch (Raisamyl 01121; Mw 650 000) was slurried in 750 ml of water. After heating to 30°C methacrylic anhydride (2.4 g; 4.8 g; 9.5 g or 23.8 g) was added. The pH of the slurry was kept at 8.0-8.5 for 3 hours with aqueous sodium hydroxide. Finally, the pH was adjusted to 6.0 with hydrochloric acid, starch methacrylates were filtrated, washed with water and oven dried at 40°C. The starch esters characterised with 1H NMR had the degree of methacrylate substitution of 0.003, 0.005, 0.013 and 0.028 respectively.

### Examples 9, 10, 11 and 12.

Preparation of starch methacrylate based co-polymers containing 50 weight-% starch:
75 g of dry starch methacrylate (Examples 5, 6, 7 and 8) was dissolved to 570 g of water by cooking. 44.4 g of ethyl acrylate and 30.6 g of methacrylic acid were introduced to the cooled starch solution. The stirred solution was heated to 80°C and flushed continuously with nitrogen. An initiator solution containing 0.3 g of ammonium persulphate in 35 g of water was slowly added during the period of 1 h. The temperature of the reaction mixture was increased to 85°C for 3 h.

### Comparative example 13.

Co-polymerization of Examples 9-12 was repeated with non-polymerizable unmodified oxidized potato starch (Raisamyl 01121; Mw 650 000).

**Properties of co-polymers from examples 9 - 13 are summarized in the following table:**

| | Starch methacrylate DS | Average number of polymerizable groups per starch chain ¹ | Co-polymer Solids content ² | Co-polymer Viscosity ² | Neutralized viscosity at 4% solids³ | Neutralized viscosity at 1% solids³ |
|---|---|---|---|---|---|---|
| Example 13 | 0 | 0 | 19.1 % | 51 mPas | 1250 mPas | 284 mPas |
| Example 9 | 0.003 | 12 | 20.3 % | 472 mPas | 1270 mPas | 586 mPas |
| Example 10 | 0.005 | 20 | 19.8 % | 1350 mPas | 2540 mPas | 1780 mPas |
| Example 11 | 0013 | 48 | 18.1 % | 2320 mPas | 16200 mPas** | 320 mPas** |
| Example 12 | 0.028 | 108 | 132%* | 516 mPas | 38400 mPas** | 108 mPas** |

| | | | | | | |
|---|---|---|---|---|---|---|
| ^{*} dilution with water needed during the co-polymerization ^{**} highly cross-linked insoluble grit ¹ Average number of polymerizable groups per starch chain = DS*Mw/(Magu+DS*Msubst) where DS = degree of substitution (from 1H-NMR spectroscopy) Mw = weight average molecular weight (from size exclusion chromatography) Magu = molar weight of anhydroglycose unit = 162 for starch Msubst = molar weight from substituent = 69 1 from methacrylate ester ² Solids contents and Brookfield viscosities after co-polymerization at pH 1-3; ³ Brookfield viscosities at pH 7; | | | | | | |

The effect of increasing amount of polymerizable groups on starch is seen as higher thickening efficiencies. In examples 11 and 12, too high amount of polymerizable groups on starch led to formation of partially water insoluble gels.

### Example 14.

Rheology of paper coating colours with co-polymers from examples 9-13 was compared with fully synthetic acrylic rheology modifier Rheovis CTE302 from Ciba in the coating colour composition, which contained 100 dry parts of Hydrocarb 60 (calcium carbonate from Omya) and 10 dry parts of Latexia 302 (XSB latex binder from Ciba) and 0.4 dry parts of rheology modifier. The solids contents of the coating colours were adjusted to 64% and pH's to 8.5. The example 10 gave the highest viscosities of the macromonomer based rheology modifiers. The co-polymers of examples 11 and 12 were too cross-linked to dissolve into the coating colour.

| Rheology modifier | starch methacrylate DS in co-polymer | Brookfield viscosity Br50 / Spindle 4 (mPas) | Brookfield viscosity Br100 / Spindle 4 (mPas) | high shear viscosity¹ (mPas) | water retention² (g/m²) |
|---|---|---|---|---|---|
| Example 13 | 0 | 758 | 496 | 38.9 | 113.5 |
| Example 9 | 0.003 | 716 | 530 | 38.7 | 110.6 |
| Example 10 | 0.005 | 1740 | 1090 | 36.3 | 132.6 |
| Example 11 | 0.013 | 484** | 352** | 26.4 | 232.7 |
| Example 12 | 0.028 | 268** | 192** | n a. | n.a. |
| Rheovis CTE302 | - | 1160 | 756 | 36 8 | 104.4 |

| | | | | | |
|---|---|---|---|---|---|
| ¹ High shear viscosity at the shear rate of 1 000 000 1/s measured with ACAV A2 capillary viscometer ² The water retention is determined using a device of the AAGWR (Åbo Akademi Gravimetric Water Retention) type sold by the company GRADEK®. ** insoluble grit in coating colour | | | | | |

### Example 15

Preparation of starch methacrylate based co-polymers containing 50 weight-% starch:
75 g of dry starch methacrylate (methacrylate DS 0.005; Example 6) was dissolved to 570 g of water by cooking. 41.45 g of ethyl acrylate, 28.56 g of methacrylic acid and 5.00 g of acrylamide were introduced to the cooled starch solution. The stirred solution was heated to 80°C and flushed continuously with nitrogen. An initiator solution containing 0.3 g of ammonium persulphate in 35 g of water was slowly added during the period of 1 h. The temperature of the reaction mixture was increased to 85°C for 3 h. 100 ml of water was added to during the reaction to reduce the viscosity. Solids content was 17.0% and viscosity 2910 mPas (5/100). Neutralized 1% sample of the dispersion had the viscosity of 1890 mPas (5/100) and neutralized 4% sample 4740 mPas (6/100).

### Example 16

Preparation of starch methacrylate based co-polymers containing 50 weight-% starch:
150 g of dry starch methacrylate (methacrylate DS 0.005; Example 6) was dissolved to 1140 g of water by cooking. 85.85 g of ethyl acrylate, 59.16 g of methacrylic acid and 5.00 g of acrylamide were introduced to the cooled starch solution. The stirred solution was heated to 80°C and flushed continuously with nitrogen. An initiator solution containing 0.6 g of ammonium persulphate in 70 g of water was slowly added during the period of 1 h. The temperature of the reaction mixture was increased to 85°C for 3 h. 250 ml of water was added to during the reaction to reduce the viscosity. Solids content was 17.1% and viscosity 1650 mPas (4/100). Neutralized 1% sample of the dispersion had the viscosity of 1590 mPas (5/100) and neutralized 4% sample 2420 mPas (5/100).

### Example 17

Rheology of paper coating colours with co-polymers from examples 15 and 16 were compared with fully synthetic acrylic rheology modifier Sterocol FS from BASF in the coating colour composition, which contained 100 dry parts of Hydrocarb 60 (calcium carbonate from Omya) and 10 dry parts of Styronal D 628 (latex binder from BASF). Rheology modifiers were dosed to adjust the Brookfield 100/min viscosity of the coating colour to 1400 mPas. Solids contents of the coatings colours were 64 % and pH's 8.5-8.8. Rheology and water retention results of the coating colour with starch backbone based rheology modifier of Example 15 was comparable to Sterocol FS.

| Rheology modifier | Rheology modifier dosage (dry parts) | Viscosity Brookfield 100/min (mPas) | high shear viscosity¹ (mPas) | water retention² (g/m2) |
|---|---|---|---|---|
| Example 15 | 0.70 | 1430 | 46.4 | 46.1 |
| Example 16 | 0.80 | 1420 | 48.5 | 54.2 |
| Sterocol FS | 0.61 | 1310 | 43.4 | 47.8 |

| | | | | |
|---|---|---|---|---|
| ¹ High shear viscosity at the shear rate of 1 000 000 1/s measured with ACAV A2 capillary viscometer. ² The water retention is determmed using a device of the AAGWR (Åbo Akademi Gravimetric Water Retention) type sold by the company GRADEK®. | | | | |

## Claims

1. An aqueous polymer dispersion or solution, comprising a co-polymer obtainable by co-polymerizing
(a) one or more ethylenically unsaturated polysaccharide derivatives;
(b) one or more a,β-ethylenically unsaturated carboxylic acids; and
(c) one or more hydrophobic monomers.

2. The aqueous polymer dispersion or solution according to claim 1, wherein the co-polymer comprises
(a) 20-70 weight-% of ethylenically unsaturated polysaccharide derivatives
(b) 5-30 weight-% of α,β-ethylenically unsaturated carboxylic acids; and
(c) 10-50 weight-% of hydrophobic monomers.

3. The aqueous polymer dispersion or solution according to claim 1 and/or 2, wherein the ethylenically unsaturated polysaccharide derivative (a) is an α,β-ethylenically unsaturated polysaccharide derivative, preferably a starch ester selected from the group consisting of acrylate, methacrylate, itaconate, crotonate, fumarate, aconitate or maleate esters of starch.

4. The aqueous polymer dispersion or solution according to claim 1 and/or 2, wherein the ethylenically unsaturated polysaccharide derivative (a) is a starch ether of allyl chloride, allyl bromide, glycidyl methacrylate, glycidyl acrylate and N-methylol acrylamide.

5. The aqueous polymer dispersion or solution according to any one of claims 1 to 4, wherein the ethylenically unsaturated polysaccharide derivative (a) has a weight average molecular weight from 50 000 to 1 000 000 daltons.

6. The aqueous polymer dispersion or solution according to any one of claims 1 to 5, wherein the α,β-ethylenically unsaturated carboxylic acid (b) is selected from the group consisting of acrylic acid, methacrylic acid, itaconic acid, maleic acid and crotonic acid.

7. The aqueous polymer dispersion or solution according to any one of claims 1 to 6, wherein the hydrophobic monomers (c) are selected from the group consisting of methyl (meth)acrylate, ethyl (meth)acrylate, butyl (meth)acrylate, acrylonitrile, butadiene and styrene.

8. The aqueous polymer dispersion or solution according to any one of claims 1 to 7, which has a solids content higher than 10% and a Brookfield viscosity less than 3000 mPas at a pH lower than 5.

9. The aqueous polymer dispersion or solution according to any one of claims 1 to 8, which can be diluted with water to 1% solids content to give a Brookfield viscosity of less than 50 mPas at a pH lower than 5, and which dissolves at pH 7 to give a Bookfield vicosity higher than 500 mPas at 1 % solids content.

10. The aqueous polymer dispersion or solution according to any one of claims 1 to 9, where the ethylenically unsaturated polysaccharide derivative (a) is prepared in situ before the co-polymerization, preferably by reacting an α,β-ethylenically unsaturated carboxylic acid or an anhydride thereof with a polysaccharide.

11. Use of an ethylenically unsaturated polysaccaride derivative, preferably a starch ester selected from the group consisting of acrylate, methacrylate, itaconate, crotonate, fumarate, aconitate or maleate esters of starch, or a starch ether of allyl chloride, allyl bromide, glycidyl methacrylate, glycidyl acrylate and N-methylol acrylamide, in the preparation of rheology modifying alkali swellable thickeners, wet-end polymers, surface sizing agents, UV curable compositions, latex like binders for coating colours and water based barrier coatings.

12. Use of the aqueous polymer dispersion or solution according to any one of claims 1 to 10 as a rheology modifying alkali swellable thickener, wet-end polymer, surface sizing agent, UV curable composition, latex like binder for coating colours and water based barrier coatings.

13. A thickener composition for modifying the rheology of paper coatings, paints, and cosmetics comprising the aqueous polymer dispersion or solution as defined in any one of claims 1 to 10.

14. A latex binder comprising the aqueous polymer dispersion or solution as defined in any one of claims 1 to 10.

15. A process for preparing an aqueous polymer dispersion or solution, comprising co-polymerizing in an aqueous medium
(a) one or more ethylenically unsaturated polysaccharide derivatives;
(b) one or more α,β-ethylenically unsaturated carboxylic acids; and
(c) one or more hydrophobic monomers.
